(19) Europäisches Patentamt / European Patent Office / Office européen des brevets

(11) EP 1 737 805 B1

(12) EUROPEAN PATENT SPECIFICATION

(45) Date of publication and mention of the grant of the patent: **20.08.2008 Bulletin 2008/34**

(21) Application number: **05729239.3**

(22) Date of filing: **01.04.2005**

(51) Int Cl.: ***C05D 9/02*** *(2006.01)*

(86) International application number: **PCT/EP2005/003457**

(87) International publication number: **WO 2005/095305 (13.10.2005 Gazette 2005/41)**

# (54) PLAN NUTRIENT BASED ON O,P-ETHYLENE(BIS)HYDROXYPHENYL GLYCINES

PFLANZENNAHRUNG AUF BASIS VON O,P-ETHYLEN(BIS)HYDROXYPHENYLGLYCINEN

ELEMENT NUTRITIF POUR LES VEGETAUX A BASE DE GLYCINES O,P-ETHYLENE(BIS) HYDROXYPHENYLE

(84) Designated Contracting States:
**AT BE BG CH CY CZ DE DK EE ES FI FR GB GR HU IE IS IT LI LT LU MC NL PL PT RO SE SI SK TR**
Designated Extension States:
**BA**

(30) Priority: **02.04.2004 GB 0407607**
**18.06.2004 GB 0413698**

(43) Date of publication of application:
**03.01.2007 Bulletin 2007/01**

(73) Proprietor: **Syngenta Participations AG**
**4058 Basel (CH)**

(72) Inventors:
- **MCKENZIE, Duncan,**
  **c/o Syngenta Crop Protection AG**
  **CH-4058 Basel (CH)**
- **LUCENA, Juan-Jose,**
  **Dpto. Quimica Agricola**
  **E-28049 Madrid (ES)**
- **JACKSON, David Anthony,**
  **Syngenta-Huddersfield**
  **Huddersfield-West Yorkshire HD2 1FF (GB)**

(74) Representative: **Ward, Steven Paul et al**
**Syngenta Limited,**
**Intellectual Property Department,**
**Jealott's Hill International Research Centre,**
**P.O. Box 3538**
**Bracknell RG42 6YA (GB)**

(56) References cited:
- **F. YUNTA ET AL.: "Theoretical speciation of ethylenediamine-N-(o-hydroxyphenylacetic)-N'-(p-hydroxyphenylacetic) acid (o,p-EDDHA) in agronomic conditions" J. AGRIC. FOOD CHEM., vol. 51, 2003, pages 5391-5399, XP002331558**
- **M.A. CREMONINI ET AL.: "NMR analysis of the iron ligand ethylenediaminedi(o-hydroxyphenyl) acetic acid (EDDHA) empolyed in fertilizers" J. AGRIC. FOOD CHEM., vol. 49, 2001, pages 3527-3532, XP002331559 cited in the application**
- **L. HERNANDEZ-APAOLAZA ET AL.: "Chromatographic determination of commercial Fe(III) chelates of ethylenediaminetetraacetic acid, ethylenediaminedi(o-hydroxyphenylacetic) acid and ethylenediaminedi(o-hydroxy-p-methylphenyl acetic) acid" JOURNAL OF CHROMATOGRAPHY A, ELSEVIER, AMSTERDAM, NL, vol. 789, no. 1-2, 21 November 1997 (1997-11-21), pages 453-460, XP004099967 ISSN: 0021-9673**
- **M. GOMEZ-GALLEGO ET AL.: "Synthesis of o,p-EDDHA and its detection as the main impurity in o,o-EDDHA commercial iron chelates" J. AGRIC. FOOD CHEM., vol. 50, 2002, pages 6395-6399, XP002331560 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 737 805 B1

## Description

The present invention relates to novel mixtures of N,N'-ethylene-bis(hydroxyphenyl)-glycines, their metal complexes, agrochemical compositions, comprising them as active ingredient, their use in the field of agriculture as plant nutrient or component of fertilizers for plants and for treatment of chlorosis in plants.
N,N'-ethylene-bis(hydroxyphenyl)glycines (EDDHA) of formula I are known.

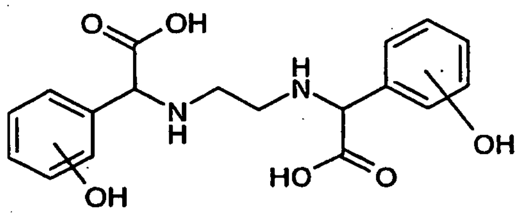

(I)

The position of the aromatic hydroxy groups at the various aromatic carbon atoms of the two separate phenyl rings allows the formation of different isomers. The predominant positions of hydroxy-substituents are the ortho- and para-positions at their respective phenyl rings.
One of the isomers is N,N'-ethylene-bis(4-hydroxyphenyl)glycine, in which both phenyl rings are para substituted with hydroxy (p,p-EDDHA). This compound is known in the art and is generally considered as unsuitable for complexing metals for the use in agriculture.
A further isomer is N,N'-ethylene-bis(2-hydroxyphenyl)glycine, in which both phenyl rings are ortho substituted with hydroxy (o,o-EDDHA). This compound is well-known in the art and is often described as the most favorable compound for complexing metals, and being most suitable for the use as a plant nutrient or fertilizer because the complexation affinity to iron is particularly strong.
The ferric chelate of o,o-EDDHA shows a coordination number of 6 and is widely used for agrichemical purposes as a plant nutrient or plant fertilizer, and for the treatment of chlorosis in crop plants. An illustrative picture of the ferric chelate of o,o-EDDHA is displayed, for example, in US-A-2921847.
Another isomer is N,N'-ethylene-(2-hydroxyphenyl)-gtycinyl-(4-hydroxyphenyl)glycine of formula II, in which one of the phenyl rings is ortho substituted with hydroxy while the other is para substituted with hydroxy (o, p-EDDHA).

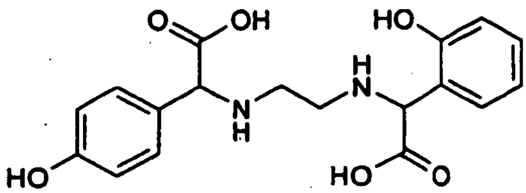

(II)

Because the ferric chelate of o,p-EDDHA shows a coordination number of 5 and its complexation affinity to iron is weaker than that of o,o-EDDHA, this compound has often been seen as an undesired by-product being incurred by the manufacturing process of o,o-EDDHA.
However, minor amounts of o,p-EDDHA have been generally accepted as an undesired but unavoidable impurity of o, o-EDDHA products, which is incurred from the production process as a by-product. In fact, in most commercial EDDHA products low amounts of o,p-EDDHA are found as impurity of the o,o-EDDHA.
For reason of providing the pure product and achieving product homogeneity, most contemplated commercial processes are designed to avoid the o,p-EDDHA as by-product, for example the process disclosed in CH-A-633257.
J. Agric. Food Chem. 2003, 51, 5391-5399 describes methods of characterising and quantifying o,o-EDDHA, o,p-EDDHA and p,p-EDDHA as free ligands and as calcium, magnesium, copper (II) and iron (III) chelates.
For the treatment of plant chlorosis, a suitable chelating agent for iron should be

a) sufficiently stable in the affinity to iron in order to avoid competition in complexation from other cations,
b) it should be rather non-reactive with common soil materials,
c) the affinity to Fe (11) should be low,

d) it should not prevent iron reduction in dicotyledonous plants and
e) should not compete with the natural chelating agents, phytosiderophores, in monocotyledonous plants (competition with phytosiderophores is one of the shortcomings of o,o-EDDHA). Additionally,
f) the chelating agent should be able to release iron from the soil solid phase quite quickly.

The properties of the commercially available chelating agents on basis of o,o-EDDHA for the treatment of chlorosis of plants are in this aspect not completely satisfactory. Likewise, the availability of iron from such products to the treated plants is to some extent delayed, even where the intended administration to the plant aims at a quick supply with plant nutrient iron.

It is an object of this invention to provide an improved chelating EDDHA agent showing a combination of quicker iron release than known from the commercial chelating agents, with an unchanged spectrum of advantageous properties of the chelating agent which are described in the prior art.

It has surprisingly been found that employing certain higher amounts of the formerly undesired by-product o,p-EDDHA in iron chelating EDDHA products in fact improves the plant nutrient and fertilizing properties of said products.

According to present invention it is proposed to improve the plant nutrient and chlorosis treating properties of metal chelating EDDHA agents by utilizing an effective amount of o,p-EDDHA in a mixture comprising the o,o- and o,p-isomers of N,N'-ethylene-bis(hydroxyphenyl)glycines, wherein characteristically the molar ratio of N,N'-ethytene-(2-hydroxyphenyl)-glycinyl-(4-hydroxyphenyl)glycine (o,p-EDDHA) to N, N' -ethylene-bis(2-hydroxyphenyl)glycine (o,o-EDDHA) is higher than 0.8 : 1, particularly of between 0.9 : 1 and 100:1. Preferably, the ratio of o,p-EDDHA to o,o-EDDHA is of from 1 : 1 to 50 : 1, or of from 2:1 to 10:1, or of from 0,9 : 1 to 2 : 1.

The present invention also relates to metal complexes of isomeric mixtures comprising N,N'-ethylene-bis(hydroxyphenyl)glycinies, wherein the molar ratio of N,N'-ethylene-(2-hydroxyphenyl)-glycinyl-(4-hydroxyphenyl)glycine (o,p-EDDHA) to N,N'-ethylene-bis(2-hydroxyphenyl)glycine (o,o-EDDHA) is higher than 0.8 : 1, particularly is between 0.9 : 1 and 100:1. Preferably, the ratio of o,p-EDDHA to o,o-EDDHA is of from 1 : 1 to 50 : 1, or of from 2:1 to 10:1, or of from 0.9 : 1 to 2 : 1.

The metal complexes of the EDDHA-mixtures according to the invention may with advantage be used as active component in agriculturally acceptable compositions, or as plant nutrients as sole active component or as part of a plant nutrient combination, or components of plant fertilizers in agriculture. Preferred mixtures of EDDHA isomers for these purposes comprise the ferric chelate of o,p-EDDHA and o,o-EDDHA in the ratio according to the present description of the invention. The ferric chelates are particularly useful as nutrients for agricultural crop plants and agent for treatment of chlorosis in such plants, and are in the agricultural practice employed in form of agriculturally acceptable compositions together with suitable inert carrier materials, or as active components of fertilizers for agriculturally cultivated crop plants.

Preferably, such metal complexes are the ferric EDDHA chelates. Such ferric chelates are not limited to chelates solely comprising iron as a metal, but they may contain further metals as well, preferably an alkali- or alkaline earth metal, like sodium, potassium, calcium or magnesium, particularly sodium. Preferably, the ferric chelate is a chelate of the type Na Fe (EDDHA). K Fe (EDDHA), or a mixture thereof.

The iron content of the ferric chelate is in general from 0.5 to 10 percent by weight, preferably from 1 to 8 percent by weight, in particular from 1.5% to 7%, in particular from 2% to 6% by weight or of from 2% to 5.5%, especially from 2.4% to 5.5% percent by weight.

With an analytical method which has especially been developed and adapted for this purpose, namely the isocratic ion-pair high-performance liquid chromatography, in contrast to the former state of the analysis technology the content of o,p-EDDHA and o,o-EDDHA can now be accurately determined both in quantitative and qualitative parameters, allowing to correlate the beneficial effect of mixtures comprising o,p-EDDHA to the molar ratio of o,p-EDDHA to o,o-EDDHA contained.

The analytical method is in principle known and has been published in Journal of Chromatography A, 1996, 727, 253-264 and in Journal of Chromatography A, 1997, 789, 453-460. The method described therein for the purpose of present invention has especially been adapted for the determination of EDDHA isomers.

This adapted method describes a procedure for the chromatographic determination of the total amount of chelated iron in samples containing o,o-EDDHA and o,p-EDDHA as chelating agents and the amount of their ferric chelates, and is set out in detail in the following Examples.

The ratio of o,p-EDDHA to o,o-EDDHA in commercial products available hitherto has been determined with the newly developed analytical method under standard laboratory conditions, and showed that all ratios of o,p-EDDHA to o,o-EDDHA in the known products were lower than 0.7 : 1.

The EDDHA mixtures according to this invention and agrichemical compositions comprising these mixtures are in general applied in form of diluted aqueous suspensions obtained from standard formulations, common in the agrichemical field, and may be applied to the plants which are intended to be treated, or to the area where the plants are growing by conventional application methods like spraying or dusting. When for purposes of rationalizing work procedures a simultaneous administration of other agriculturally used active ingredients is intended, the application can

be done in any desired successive order, or even in form of a tank-mix prepared from commercial formulations. Alternatively, the EDDHA mixtures according to this invention may in selected cases be applied in solid formulations , i.e. as dusts or as granulates which may require to be mechanically incorporated into the soil.

The other agriculturally used active ingredients may be additional fertilizers, micronutrient donors or other preparations that influence plant growth and development. Likewise, it is also possible to apply simultaneously plant protection products like selective herbicides or insecticides, fungicides, bactericides, nematicides, molluscicides, or mixtures of several of such preparations, if desired.

The compositions and formulations of the isomeric mixtures of EDDHA according to present invention may further comprise agriculturally acceptable carriers, surfactants or other application-promoting adjuvants customarily employed in formulation technology.

Suitable carriers and surfactants may be solid or liquid and correspond to the substances ordinarily employed in formulation technology, such as e.g. natural or regenerated mineral substances, solvents, dispersants, wetting agents, tackifiers, thickeners, binders or fertilizers. Such carriers and additives are described, for example, in WO 95/30651.

The EDDHA-mixtures according to the invention are used in unmodified form , i.e. as obtained from the production process in the technically pure form of the crude product or, preferably, together with the adjuvants conventionally employed in formulation technology, and are for that purpose advantageously formulated in known manner e.g. into emulsifiable concentrates, coat able pastes, directly sprayable or dilutable solutions, dilute emulsions, wettable powders, soluble powders, dusts, granules, and by encapsulation in e.g. polymer substances.

As with the nature of the compositions, the methods of application, such as spraying, atomizing, dusting, scattering, coating, soil-drenching or pouring, are chosen in accordance with the intended objectives and the prevailing circumstances.

The formulations, i.e. the compositions or preparations comprising the mixtures according to the invention, may further comprise a solid or liquid adjuvant like a carrier or solvent material, and are prepared in a per-se-known manner, e.g. by homogeneously mixing and/or grinding the active ingredient with, extenders, e.g. solvents, solid carriers and, where appropriate, surface-active compounds (surfactants).

Preferred further additive adjuvant components of the above type for compositions comprising the EDDHA-mixtures according to the invention are sodium lignosulfonate, dextrine, isooctylphenol polyglycol ether, sodium polycarboxylate 2,5-furanedione polymer with 2,4,4-trimethylpentene and the sodium salt of dodecyl-benzenesulfonic acid

Further surfactants customarily used in formulation technology will be known to the person skilled in the art or can be found in the relevant technical literature.

Whereas commercial product preparations will preferably be formulated as concentrates, the end user will normally employ the chelating mixtures as dilute dispersions of the commercial formulations.

The formulations according to the invention normally comprise ferric chelates of the N,N'-ethylene-bis(hydroxyphenyl)glycines in a mixture ratio according to the invention of from 1 to 95 percent by weight, or of from 30 to 88 weight percent, or of from 35 to 73 weight percent, or of from 35 to 79 weight percent.

If the formulations are designed to comprise additional plant nutrients or plant fertilizers, these substances are preferably selected from the group including calcium sulfate $CaSO_4$, calcium nitrate $Ca(NO_3)2*4H_2O$, calcium carbonate $CaCO_3$, potassium nitrate $KNO_3$, magnesium sulfate $MgSO_4$, potassium hydrogen phosphate $KH_2PO_4$, manganese sulfate $MnSO_4$, copper sulfate $CuSO_4$, zinc sulfate $ZnSO_4$, nickel chloride $NiCl_2$, cobalt sulfate $CoSO_4$, potassium hydroxide KOH, sodium chloride NaCl, boric acid $H_3BO_3$ and metal salts thereof, $Na_2MoO_4$. The preferred additional nutrients may be present in an amount of 5% to 50% by weight, preferably of 10% to 25% by weight or of 15% to 20% by weight each.

Preferred additional nutrients are urea, melamine, potassium oxide, and inorganic nitrates. The most preferred additional plant nutrient is potassium oxide.

Where the preferred additional nutrient is urea, which may be present in an amount of 1 % to 20% by weight, preferably of 2% to 10% by weight or of 3% to 7% by weight..

Preferred individual formulations according to the invention are compositions comprising

1 to 99 weight percent of ferric chelates of N,N'-ethylene-bi s(hydroxyphenyl)glycines, wherein the ratio of o,p-EDDHA to o,o-EDDHA is higher than 0.8:1;
1 to 20 weight percent of urea;
0 to 50 weight percent of potassium oxide; or
30 to 88 weight percent of ferric chelates of N,N'-ethylene-bis(hydroxyphenyl)glycines, wherein the ratio of o,p-EDDHA to o,o-EDDHA is 1 : 1 to 50 : 1;
2 to 10 weight percent of urea;
10 to 25 weight percent of potassium oxide; or
35 to 73 weight percent of ferric chelates of N,N'-ethylene-bis(hydroxyphenyl)glycines, wherein the ratio of o,p-EDDHA to o,o-EDDHA is 2:1 to 10 : 1 or of from 0.9 : 1 to 2 : 1;

3 to 7 weight percent of urea;
15 to 20 weight percent of potassium oxide.

The mixture according to the invention may contain an admixture of combinatory plant protective fungicides, resulting in some cases in unexpected synergistic activities. Such mixtures are not limited to two active ingredients (one of formula I and one of the list of plant protective fungicides), but to the contrary many comprise more than one fungicide. Admixing components being particularly suited for this purpose include e.g.: Azoles, such as azaconazole, bitertanol, bromuconazole, cyproconazole, difenoconazole, diniconazole, epoxiconazole, fenbuconazole, fluquinconazole, flusilazole, flutriafol, hexaconazole, imazalil, S-imazalil, imibenconazole, ipconazole, metconazole, myclobutanil, oxpoconazole, pefurazoate, penconazole, pyrifenox, prochloraz, propiconazole, prothioconazole, simeconazole, tebuconazole, tetraconazole, triadimefon, triadimenol, triflumizole and triticonazole; pyrimidinyl carbinoles, such as ancymidol, fenarimol and nuarimol; 2-amino-pyrimidines, such as bupirimate, dimethirimol and ethirimol; morpholines, such as dodemorph, fenpropidine, fenpropimorph, spiroxamine and tridemorph; anilinopyrimidines, such as cyprodinil, mepanipyrim and pyrimethanil; pyrroles, such as fenpiclonil and fludioxonil; phenylamides, such as benalaxyl, furalaxyl, metalaxyl, mefenoxam (metalaxyl-M), ofurace and oxadixyl; benzimidazoles, such as benomyl, carbendazim, debacarb, fuberidazole and thiabendazole; dicarboximides, such as chlozolinate, dichlozoline, iprodione, myclozoline, procymidone and vinclozoline; carboxamides, such as carboxin, fenfuram, flutolanil, furametpyr, mepronil, oxycarboxin and thifluzamide; guanidines, such as guazatine, dodine and iminoctadine; strobilurines, such as azoxystrobin, dimoxystrobin (SSF-129), fluoxastrobin, kresoxim-methyl, metominostrobin, orysastrobin, picoxystrobin, pyraclostrobin and trifloxystrobin; dithiocarbamates, such as ferbam, mancozeb, maneb, metiram, propineb, thiram, zineb and ziram; N-halomethylthiotetrahydrophthalimides, such as captafol, captan, dichlofluanid, fluoromides, folpet and tolyfluanid; Copper-compounds, such as Bordeaux mixture, copper hydroxide, copper oxychloride, copper sulfate, cuprous oxide, mancopper and oxine-copper; nitrophenol-derivatives, such as dinocap and nitrothal-isopropyl; organo-P-derivatives, such as edifenphos, iprobenphos, isoprothiolane, phosdiphen, pyrazophos and tolclofos-methyl; various others, such as acibenzolar-S-methyl, anilazine, benthiavalicarb, blasticidin-S, boscalid, chinomethionate, chloroneb, chlorothalonil, IKF-916 (proposed name cyazofamid), cyflufenamid, cymoxanil, dichlone, diclomezine, dicloran, diethofencarb, dimethomorph, ethaboxam, fenoxanil, SYP-L190 (proposed name: flumorph), dithianon, etridiazole, famoxadone, fenamidone, fentin, ferimzone, fluazinam, flusulfamide, fenhexamid, fosetyl-aluminium, hymexazol, iprovalicarb, kasugamycin, rriethasulfocarb, metrafenone, pencycuron, phthalide, picobenzamid, polyoxins, probenazole, propamocarb, pyroquilon, proquinazid, quinoxyfen, quintozene, silthiofam, sulfur, triazoxide, triadinil, tricyclazole, triforine, validamycin, or zoxamide.

In the above mentioned compositions with admixture of fungicide, the mixture ratio of the active ingredients is so selected that it reaches optional control of the phytopathogenic microorganism on the host plants, which in turn allows the plant to fully exploit the benefit of receiving supplemental amounts of the metal from the EDDHA-chelate mixture. The mixture ratio is in general between 100:1 and 1:100, more preferably between 10:1 and 1:10 vis-à-vis the second fungicide. The mixtures may not only comprise one of the listed combinatory fungicidally active ingredients, but may comprise more than one additional active ingredients selected from that specified group, thus forming for example 3-way- or even 4-way-mixtures.
The formulations according to the invention may further comprise herbicides, particularly sulfonyl ureas, as described in e.g. EP-A-837632.

For the production of the mixture according to the invention several processes are available. These processes are in general suitable to produce pure o,o-EDDHA and o,p-EDDHA. The pure products may be mixed afterwards to give the mixture with the desired ratio. Preferably processes are directly yielding a mixture according to the invention. For example, a process according to DE-1032748 may be employed, which is displayed in Scheme 1.

Scheme 1

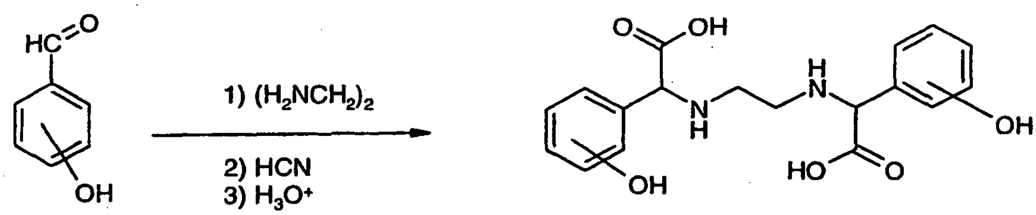


In this process, two equivalents of o-hydroxybenzaldehyde or of p-hydroxybenzaldehyde, or preferably a mixture thereof are, in a first step, condensed with one equivalent of 1,2-diaminoethane and with elimination of water yields an

aldimine. This reaction may be carried out under known standard reaction conditions. The water generated as one product during the reaction is preferably removed or trapped. Routinely this in done by standard laboratory methods like adding a drying agent, like magnesium sulfate or sodium sulfate, or by azeotropic distillation and removal of the water with a Dean-Stark trap. In the latter case dry benzene or toluene may be preferably used as solvents. In a second step, the product of the first step is reacted with hydrocyanic (prussic) acid. This step may be carried out by treating the aldimine product of the first reaction step with an aqueous solution of hydrocyanic acid in the presence of minor amounts of a mineral acid, like hydrochloric acid, at temperatures of about +20°C to +25°C. Alternatively, an acidic aqueous solution of an alkali cyanide, like sodium cyanide, may be used as the cyanide source.

For the production of pure o,p-EDDHA only the details of the first reaction step have to be changed. In this case, the o-hydroxybenzaldehyde or the p-hydroxybenzaldehyde is employed in equimolar amount to the 1,2-diaminoethane, sufficient to condense one of the two amino groups, and after the reaction of these compounds is completed, the second equivalent of the respective other hydroxybenzaldehyde isomer is added and the reaction mixture is reacted further until completion.

It is also possible to react the hydroxybenzaldehyde with hydrocyanic acid yielding the corresponding cyanohydrins and to react the cyanohydrins with 1,2-ethylenediamine in a second step.

In a third step, the resulting ethylenediamine-N,N'-bis(hydroxyphenyl)acetonitrile may be hydrolysed by known methods, for example by reaction with concentrated hydrochloric acid at temperatures of +80°C to +100°C. A base is then added to the reaction mixture until the pH value is 2 to 4, preferably 3 to 3.5. The precipitate is collected, then heated in concentrated hydrochloric acid yielding the dihydrochloride of the obtained N,N'-ethylene-bis(hydroxyphenyl)glycines. The free acid itself can finally be obtained by dissolving the dihydrochloride in excess sodium hydroxide solution and adjusting the pH value to 4.

Another process is described in J. Agric. Food Chem. 2002, 50, 6395-6399. Pure o,o-EDDHA and pure o,p-EDDHA may be obtained with this process. The pure isomers may be mixed in the desired ratio to obtain a mixture according to the invention.

Another process to obtain o,o-EDDHA in a single-vessel reaction is described in US 4,130,582. This process for the preparation of EDDHA is designed to yield high purity o,o-EDDHA by suppressing the formation of p,p-EDDHA that would otherwise be predominantly formed. It comprises reacting an excess of phenol with ethylenediamine, glyoxylic acid in the presence of a base. The purity of the obtained o,o-EDDHA is above 95% when the content of water in the reactor is kept low, but deteriorates when a higher water content is tolerated.

Surprisingly, it has now been found, that the mixture according to present invention may be synthesized in a single-vessel-reaction, suitable for up-scaling to a simple technical scale reactor size, which process comprises employing a 2- to 5-fold excess of the phenol starting material and balancing the contents of water in the reaction mixture in the range of 15% to 30 % by weight of the reaction mixture when reacting phenol with ethylenediamine and glyoxylic acid in the presence of a base.

Where particularly low amounts of phenol are utilized, no longer allowing to run the reaction in a melt of phenol or to properly handle the control equipment of the reactor, it may become necessary to add an amount of inert organic solvent that allows adjust the reaction temperature to the range of +40°C to +80°C.

The mixture ratio of o,o-EDDHA and o,p-EDDHA content in the chelating agent according to this invention, may be adjusted according to the desired embodiment of present invention by applying the indicated variation of reaction conditions.

In particular, this process for the preparation of an EDDHA mixture according to present invention comprises reacting, at a temperature of from about +45°C to about +80°C., phenol with ethylenediamine, glyoxylic acid and a base. Phenol, ethylenediamine, glyoxylic acid and the base are preferably present in a molar ratio of 4 to 10 : 0.5 to 0.55 : 0.95 to 1.10 : 0.75 to 1.25. Preferred bases are alkali metal hydroxides, in particular sodium hydroxide.

A further suitable process for the preparation of the mixtures according to the invention is the conversion of o, o-EDDHA into o,p-EDDHA by changing the pH value at elevated temperature. The pH value for this conversion is of from pH 1 to pH 14, or of from over 7, in particular 8, to 14, or of from 9 to 13, at temperatures of from +50°C to +120°C, or of from +70°C to +100°C, or of from +80°C to +90°C for the time of about 5 to about 15, or 6 to 12, or 7 to 10 hours. Under these conditions, in order to obtain a mixture according to the invention, the reaction has to be allowed to progress at the chosen conditions and then stopped when the desired mixture is obtained. In general, the reaction can be stopped by quenching the reaction mixture in water. Alternatively, the solution comprising o,o-EDDHA and o,p-EDDHA in the desired ratio may be used in a further process step to produce a metal complex, like a ferric chelate, by addition of iron (III)chloride. This process step can be carried out according to known processes.

Based on the the exact reaction conditions chosen, the skilled person establishes on the basis of various routine tests what reaction time is needed to obtain the desired ratio of o,o-EDDHA to o,p-EDDHA. The reaction mixture can be analysed by the procedure described in Journal of Agriculture & Food Chemistry, (2001) 49 (8) 3527-32).

By exposing o,o-EDDHA to these conditions it is converted to o,p-EDDHA and thus allows a convenient preparation of mixtures with ratios of o,o-EDDHA to o,p-EDDHA according to the invention. It is also possible to use a mixture of both

EDDHA isomers and to raise the content of the o,p-isomer by this process. Metal salts of EDDHA, like iron salts, are also suitable as an educt for this process and may be used likewise.
Though the processes known from e.g. US 4,130,582 and references therein, are familiar to the artisan and require the same starting materials, there is no indication for the artisan that o,p-EDDHA could be obtained during the disclosed process.

Target plants in the agricultural practice, been in need of iron chelates as additional plant nutrient and agricultural crops suffering from plant chlorosis within the scope of this invention comprise, for example, the following species of plants: cereals (wheat, barley, rye, oats, rice, maize, sorghum and related species); beet (sugar beet and fodder beet); pomes, stone fruit and soft fruit (apples, pears, plums, peaches, almonds, cherries, strawberries, raspberries and blackberries); leguminous plants (beans, lentils, peas, soybeans); oil plants (rape, mustard, poppy, olives, sunflowers, coconut, castor oil plants, cocoa beans, groundnuts); cucurbitaceae (marrows, cucumbers, melons); fibre plants (cotton, flax, hemp, jute); citrus fruit (oranges, lemons, grapefruit, mandarins); vegetables (spinach, lettuce, asparagus, cabbages, carrots, onions, tomatoes, potatoes, pepper); lauraceae (avocado, cinnamon, camphor) and plants such as tobacco, nuts, coffee, sugar cane, tea, pepper, vines, hops, bananas and natural rubber plants, and also ornamentals.

A preferred method of applying the mixtures according to the invention, or an agrichemical composition comprising such a mixture, is application of an aqueous suspension to the soil (soil applications such as a spray over the top or into the seed furrow ) or as a soil drench, the frequency and the rate of application will be selected in view of the nature of the soil, the climate , the planted crop, the level of effect by chlorosis, and the maturity stage for the treated plant. The mixtures according to the invention may also be applied to foliage (foliar application), the frequency and the rate of application also depending upon the crop, the level of chlorosis, the crop development stage for the situation question or to seed grains (coating) either by impregnating the grains with a liquid formulation of the active ingredient or by coating them with a solid formulation.
Advantageous rates of application are generally between 1 kg and 50 kg of the ferric chelate of the isomer mixture of o,o- and o,p-EDDHA, per hectare (ha), preferably from 2.5 kg to 20 kg a.i./ha, especially from 5 kg to 10 kg a.i/ha. When used as seed dressings, rates of from 0.001 kg to 1.0 kg of the isomer mixture of o,o- and o,p-EDDHA, particularly o,o- and o,p-EDDHA ferric chelates, per kg of seed are advantageously used.

The references cited herein are incorporated by reference for all useful purposes.

The following Examples only illustrate the invention described above, without limiting the scope thereof in any way. Temperatures are given in degrees Celsius.

**Examples**

<u>Analytical method</u>

The iron chelates are determined by linear gradient ion pair high-performance liquid chromatography. When an iron chelate (anion) is added to a polar fluid (eluent), containing a large cation (ion-pair reagent), an ion pair is formed. This ion pair is retained by an apolar solid phase (stationary phase). The strength of the retention depends on the molecular size and its acidity. Then, each iron chelate presents a characteristic retention time and characteristic spectra depending on the chelating agent, and it is separated from the other substances present in the sample. The separation is carried out on a reverse phase silicagel column and an aqueous solution of $TBA^+$ (tetrabutylammonium hydroxide) and acetonitrile as eluent.
The detection is based on photometry at 480 nm or a diode array detector. For $Fe^{3+}$/EDDHA a gradient method or an isocratic one can be used. *$Fe^{3+}$ /EDDHA standard solution c(Fe) = 100 mg/l/l*
<u>Instruction:</u> Dissolve 0.1613g x 100 / R, where R. is the complexometric purity of the standard in percentage of the acid form o,p-EDDHA obtained by photometric titration, with a Fe(III) standard in a pH stat system, of N,N'-ethylene-(2-hydroxyphenyl)-glycinyl-(4-hydroxyphenyl) glycine (o,p-EDDHA) in 150 ml of water and 2.7 ml of NaOH (c=0.1 mol/l). After complete dissolution, 0.1271 g of iron chloride hexahydrate ($FeCl_3 \cdot 6H_2O$) are added, stirring about 5 minutes. The solution is adjusted to pH 7,0 with NaOH solution (4.3). The solution is left overnight in darkness to allow excess Fe to precipitate as oxide and filtered quantitatively through a cellulose filter and made up to volume (250 ml) with water.

*Eluent for the determination*

Two solutions are used to make a linear gradient eluent:

Solution A: To 3.33 ml of TBAOH (40 wt.% Tetrabutylammonium hydroxide solution in water) are added 500 ml of water. The pH is adjusted to 6.0 with HCl. 350 ml of acetonitrile (HPLC grade) are added and made up to volume in a 11 volumetric flask with water and filtered through 0.2 μm membrane filter.
Solution B: To 3.33 ml of TBAOH (40 wt.% Tetrabutylammonium hydroxide solution in water) 150 ml of water are

added. The pH is adjusted to 6.0 with HCl and 750 ml of acetonitrile (HPLC grade) are added and the solution made up to volume in a 1 L volumetric flask with water and filtered through 0.2 μm membrane filter. TBACl or TBABr may also be used, providing that pH is adjusted to 6.0 with NaOH. For Fe 3+ /o,p-EDDHA determination, an isocratic method using only Solution A as eluent can also be employed

The Chromatograph is equipped with a gradient pump delivering the eluent at a flow rate of 1.5 ml/min. In table 1 the gradient table is presented.

Table 1 Gradient table

| Time (min) | Flow rate (ml/min) | %A | %B | Curve type |
|---|---|---|---|---|
| 0 | 1.5 | 100 | 0 | Linear |
| 5 | 1.5 | 100 | 0 | Linear |
| 6 | 1.5 | 0 | 100 | Linear |
| 11 | 1.5 | 0 | 100 | Linear |
| 12 | 1.5 | 100 | 0 | Linear |
| 20 | 1.5 | 100 | 0 | Linear |

For $Fe^{3+}$ /o,p-EDDHA determination an isocratic elution can also be done using 100% A for 7 minutes. The chromatograph is equipped with an injection valve With a 20 μl injection loop. The column used is a C-18 column; 3,9 x 150 mm ID; dp = 5 μm (e.g.: SYMMETRY® C18, from WATERS) and a UV/VIS-detector with a 480 nm-filter or diode array, and an integrator:

Samples are prepared according top method 1 of Directive 77/535/EEC, OJ № L 213,22.8.1977.

*Preparation of the sample solution*

125 mg within 0.1 mg are weighed into a 100 ml beaker (For samples with more of 4% of chelated iron, 80 mg and for samples with less 2% of chelating Fe 250 mg are employed). 80 ml of water are added and stirred for 30 minutes. After homogenization the solution is diluted to the mark with water.

*Preparation of the calibration solutions*

An amount of V1 ml (see table 2) of the chelate standard solution is pipetted into four 100 ml volumetric flasks and made up to volume with water and homogenized.

Table 2. Preparation of the calibration curve.

| Solution | V1 (ml) | Concentration of Fe-EDDHA-standard | |
|---|---|---|---|
| | | (mg Fe/ L) | (mmo l/ L) |
| 1 | 5 | 5.0 | 0.090 |
| 2 | 10 | 10.0 | 0.179 |
| 3 | 25 | 25.0 | 0.448 |
| 4 | 50 | 50.0 | 0.895 |

*Chromatographic analysis*

Immediately before injection, all solutions are filtered through a 0.45 μm membrane filter. The standard solutions (Table 2) are injected into the chromatographic system. Retention times are measured and the areas of the chelate (Fe 3+ /o,p-EDDHA) chromatographic peaks are determined for all solutions.
A calibration graph is drawn with the values of the peak area of the standard solutions versus the corresponding chelating agent concentration (mg Fe/L or mmol/l).
The sample solution are injected and the chelating agent is identified by the retention time of the obtained peaks and if diode array detector is used, confirmed with UV-visible spectrum. Areas of the peaks are measured for the chelating

agent. The concentration of the iron chelated (mg Fe/L) or the chelating agent (mmol/L) is determined using the calibration graph.

In case of the iron chelates the percentage by weight of the Fe (Fe(%)) as $Fe^{3+}$/o,p-EDDHA in the fertilizer is equal to:

$$Fe(\%) = C / m \cdot 0.01$$

- where :

C *is* the Fe concentrations (mg/L) of the Fe chelated by o,p-EDDHA determined with the calibration graph and m: is the mass of the sample taken for analysis in grams.

**Preparation examples:**

Preparation of the N,N'-ethylene-bis[(hydroxyphenyl)acetonitrile]

A mixture of 109.8 g o-hydroxybenzaldehyde and 134.2 g p-hydroxybenzaldehyde in 600 ml of dry toluene is cooled to 0°C and a solution of 80 g ethylenediamine in 300 ml of dry toluene is added so that the temperature does not rise above +70°C. When the addition of the amine is completed, the mixture is refluxed with a Dean-Stark trap attached to the reflux condenser until no more water separated. The solvent and the excess amine are distilled off under reduced pressure. Yield: 90%.
To 268.1 parts by weight of the reaction product 700 parts by volume of liquid hydrocyanic acid, 180 parts by weight of water and 1.5 parts by volume of hydrochloric acid are added at a temperature of 0°C. The reaction mixture is stirred for three more hours. The reaction products forms during the reaction time and is filtered off. Melting point: 113-115°C.

Preparation of the N,N'-ethylene-bis(hydroxyphenyl)glycine

100 parts by weight of the N,N'-ethylene-bis[(hydroxyphenyl)acetonitrile] are heated in 1000 parts by volume of concentrated hydrochloric acid to +80 to +100°C for 3 hours. The educt dissolves slowly and after about ½ -1 hour another compound starts to precipitate. The reaction mixture is cooled and the precipitate is filtered off and washed with isopropanol. 100 parts by weight of the precipitate are taken up in water and heated to +100°C for 4 hours. Half of the water is distilled off and sodium hydroxide solution is added until the pH value reaches 3.5. A precipitate is being formed which is filtered off, re-dissolved in concentrated hydrochloric acid and heated to +100°C for 1 hour. The precipitate is dissolved in an aqueous sodium hydroxide solution and the pH value is adjusted to 4.0. The reaction product precipitates, is filtered and washed with isopropanol of a temperature of 0°C and dried. Melting point: 218-220°C, Yield: 31 %.

Preparation of the o,o- and o,p- mixture of N,N'-ethylene-bis(hydroxyphenyl)glycine

With the process described in US-A-4130582 and above, o,o-EDDHA has been prepared. With the same process o,p-EDDHA has been prepared by reacting equimolar amounts of o hydroxybenzaldehyde and ethylenediamine. After completion of the reaction, an equimolar amount of p-hydroxybenzaldehyde was added and further reacted as described in US-A-4130582 to yield o,p-EDDHA. 10 g o,o-EDDHA and 10 g o,p-EDDHA were placed in a mortar and grinded thoroughly.

Preparation of the o,o- and o,p- mixture of N,N'-ethylene-bis(hydroxyphenyl)gycine in a single-vessel-reaction

A reaction vessel fitted with a condenser, dropping funnels and means for mechanical agitation was charged with 17 moles of molten phenol and retained at a temperature of +40-45°C. Then, 1 mole of ethylene diamine and, 50% aqueous sodium hydroxide solution containing 1.6 mole of sodium hydroxide and 10 moles of water (10mole) were added. After the reaction mixture was cooled to +40-45°C again, 50% aqueous glyoxylic acid containing 2 mole of glyoxylic acid were added and the reaction mixture was heated to +70°C for 3 hours. The reaction mixture was then poured into excess water and the excess phenol was extracted with dichloromethane. The aqueous phase was examined by 1H-NMR and found to contain a mixture of o,o-EDDHA and o,p-EDDHA in a ratio of about 1:1.

Preparation of the ferric chelate

To N,N'-ethylene-bis(hydroxyphenyl)glycine, sodium hydroxide solution is added until a clear solution is obtained. 40% technical iron (III)chloride solution is slowly added in an excess of 27% while the pH value is kept at 7-8 by addition of further sodium hydroxide solution. The solution is evaporated to yield the ferric chelate of the type EDDHA Na Fe with an iron content of 5.3 %.

1. Conversion of o,o-EDDHA to o,p-EDDHA

2 g of o,o-EDDHA prepared according to US 4,130,582 were dissolved in water, yielding 10ml of a 20% aqueous solution. The o,o-EDDHA solution was adjusted to pH 13 with 50% aqueous sodium hydroxide solution. The reaction mixture was heated to +80°C to +90°C and stirred at this temperature for 7 hours. A sample of the reaction mixture was quenched in deuterium oxide and the pH adjusted to 0-1 with 98% sulphuric acid. The sample was analysed by proton-NMR according to Journal of Agriculture & Food Chemistry, (2001) 49 (8) 3527-32. The mixture was found to contain o,o-EDDHA and o,p-EDDHA in a ratio of 1:1.

Biological Examples

Soybean (cv.Oshumi) plants have been used in the biological experiment. Plants were obtained from soybean seeds that were germinated in standard seed growing procedure in closed sterilized trays. The seeds were placed in the trays on a cellulose paper soaked with 50 milliliters of distilled water and with another paper placed over them. 30 ml distilled water and 20 ml $CaSO_4$ 1mM were added. The trays were placed in a thermostatized stove, without light, at +28°C for 3 days. After this time the seedlings of similar development were placed on a holed plate floating over containers full of diluted nutrient solution and EDTA for 7 days. Nutrient solutions (without iron) were a mixture of: macronutrients: 1 mM $Ca(NO_3)_2$ .$4H_2O$, 0.9 mM $KNO_3$, 0.3 mM $MgSO_4$, 0.1 mM $KH_2PO_4$; cationic micronutrients: 2.5 μM $MnSO_4$, 1 μM $CuSO_4$, 10 μM $ZnSO_4$, 1 μM $NiCl_2$, 1 μM $CoSO_4$, 115.5 μM $EDTANa_2$ (100 μM in excess to buffer micronutrients activities), 231 μM KOH; anionic micronutrients: 35μM NaCl, 10μM $H_3BO_3$, 0.05 μM $Na_2MoO_4$. The pH was buffered at 7.5 with 0.1 mM HEPES (N-2-Hydroxyethylpiperazine-N'-2-ethanesulfonic acid), 0.05mM KOH and 2 g of $CaCO_3$ per pot. Later, plants were subjected to a stressing procedure that consisted in putting them in five pails that contained 10 1 each one of nutrient solution without iron chelate. The leaves were losing color indicating this way the iron chlorosis. After 6 days, the stems of two plants were wrapped together with foam and placed in 21 polyethylene vessels (3 holes per lid, 2 plants per pot). The pots were completely covered with black plastic to avoid the incidence of the light. The vessels contained 2 l of continuously aerated nutrient solution containing the Fe treatments. Nutrient solution consisted of macronutrients and anionic micronutrients as before and cationic micronutrients: $MnSO_4$ (1 μM), $CuSO_4$ (0.5 μM), $ZnSO_4$ (0.5 μM), $NiCl_2$ (0.1 μM) and $CoSO_4$ (0.1 μM). Water was added every two days and the solution was renewed every week. Plants were sampled 14 days after. Roots and leaves were separated and washed first with Tween® 80 (polyoxyethylene sorbitan monooleate) in 0.1 M HCl for 30 seconds, and then with abundant distilled water, after that they were weighted and dried. Micronutrientes were determined in leaves and in roots after dry digestion procedure and atomic absorption. During the experiment SPAD readings were frequently taken using the Minolta SPAD 502 chlorophyll meter, for all the leaves.

Seven different treatments were applied:

Comparative Example 1: No iron added.
Comparative Example 2: Fe-o,o-EDDHA 5 μM
Comparative Example 3: Fe-o,o-EDDHA 5 μM + Fe-o,p-EDDHA 1 μM.
Comparative Example 4: Fe-o,o-EDDHA 5 μM + Fe-o,p-EDDHA 2.5. μM.
Comparative Example 5: Fe-o,o-EDDHA 10 μM
Example 1: Fe-o,p-EDDHA 5 μM.
Example 2: Fe-o,o-EDDHA 5 μM + Fe-o,p-EDDHA 5 μM.

Four replications were prepared for each treatment.

Table 3. Weight of fresh plant, fresh and dry leaf and fresh and dry root. (The number is the mean of 4 replicates)

| Treatments | Fresh plant weight (g) | Fresh root weight (g) | Fresh leaf weight (g) | Dry leaf weight (g) | Dry root weight (g) |
|---|---|---|---|---|---|
| Comp. Example 1 | 5.133 | 2.859 | 1.116 | 0.339 | 0.264 |
| Comp. Example 2 | 6.781 | 3.818 | 1.257 | 0.321 | 0.282 |
| Comp. Example 3 | 12.383 | 5.245 | 3.877 | 0.602 | 0.364 |
| Comp. Example 4 | 20.344 | 9.660 | 5.979 | 0.895 | 0.556 |
| Comp. Example 5 | 15.862 | 7.316 | 4.736 | 0.781 | 0.425 |
| Example 1 | 21.186 | 8.933 | 6.282 | 1.136 | 0.595 |
| Example 2 | 22.001 | 10.089 | 6.499 | 1.092 | 0.643 |

Table 4. Iron content in parts of the plants. (The number is the mean of 4 replicates)

| | μg Fe/ g dry root | μg Fe/ g dry leave | μg Fe/ number of leaves |
|---|---|---|---|
| Comparative Example 1 | 26.51 | 31.35 | 10.92 |
| Comparative Example 2 | 90.32 | 62.30 | 19.82 |
| Comparative Example 3 | 102.36 | 68.39 | 52.21 |
| Comparative Example 4 | 98.46 | 74.12 | 64.06 |
| Comparative Example 5 | 77.22 | 74.87 | 55.15 |
| Example 1 | 128.48 | 80.98 | 91.91 |
| Example 2 | 101.95 | 73.59 | 78.60 |

Table 5. Spad index obtained for the plants during the experiment (values for the second leaf). Means of 4 replicates.

| Time / days | C1 | C2 | C3 | C4 | C5 | E1 | E2 |
|---|---|---|---|---|---|---|---|
| 0 | 20.8 | 12.7 | 16.8 | 18.1 | 16.6 | 14.7 | 17.2 |
| 2 | 19.2 | 10.1 | 15.5 | 17.6 | 15.7 | 14.0 | 16.9 |
| 4 | 17.2 | 9.1 | 16.2 | 19.8 | 15.0 | 18.0 | 23.8 |
| 7 | 14.4 | 9.5 | 18.0 | 22.0 | 18.2 | 21.4 | 27.7 |
| 9 | 13.6 | 9.2 | 18.1 | 24.1 | 19.7 | 23.9 | 30.6 |
| 11 | 12.8 | 8.2 | 18.2 | 22.7 | 19.0 | 24.9 | 30.5 |

In the biological examples it has been shown that treatment of the plants with ferric chelates of o,p-EDDHA results in a considerable raise of weight of the plants, see comparison of Example 1 with Comparative Examples 1 to 3 in Table 3. Mixtures comprising ferric chelates of o,p-EDDHA and o,o-EDDHA in a ratio of 1:1 also show an increased weigth of the plants, see comparison of Example 2 with Comparative Examples 4 and 5 in Table 3. An increase in the iron content in parts of the plants under the conditions of the experiments can be seen in Table 4, comparing the values of Example 1 with Comparative Examples 1 to 3 and Example 2 with Comparative Examples 4 and 5.
Also the SPAD values, which are a measure for the chlorophyll contents of the leaves, raise considerably steeper in Example 1 in comparison to Comparative Examples 1 to 3 or Example 2 in comparison to Comparative Examples 4 and 5, respectively. The SPAD values after 11 days are also higher in the Examples than in the Comparative Examples.

These results show a faster response of the plants to iron in the presence of ferric chelates of o,p-EDDHA.

## Claims

1. A mixture comprising, isomeric N,N'-ethylene-bis(hydroxyphenyl)glycines, wherein the molar ratio of N,N'-ethylene-(2-hydroxyphenyl)-glycinyl-(4-hydroxyphenyl)glycine (o,p-EDDHA) to N,N'-ethylene-bis(2-hydroxyphenyl)glycine (o,o-EDDHA) is higher than 0.8:1.

2. Metal complexes of mixtures comprising isomeric N,N'-ethylene-bis(hydroxyphenyl)-glycines, wherein the molar ratio of N,N'-ethylene-(2-hydroxyphenyl)-glycinyl-(4-hydroxyphenyl)glycine (o,p-EDDHA) to N,N'-ethylene-bis(2-hydroxyphenyl)glycine (o,o-EDDHA) is higher than 0.8 : 1.

3. Metal complexes according to claim 2, said metal complexes being ferric chelates of EDDHA.

4. Mixture according to claim 1, wherein the ratio of isomeric o,p- to o,o-EDDHA is of from 0.9: 1 to 100:1.

5. Process for the preparation of a mixture according to claim 1 comprising conversion of o,o-EDDHA into o,p-EDDHA by changing the pH value at temperatures of from +50°C to +120°C.

6. A agrichemical composition comprising as active component the mixture of o,p-EDDHA and o.o-EDDHA, or a metal complex thereof, according to any one of the claims 1 to 4.

7. A composition according to claim 6, comprising further additional plant nutrients or plant fertilizers, herbicides, insecticides, fungicides, bactericides, nematicides, molluscicides or mixtures thereof

8. A composition according to claim 7 comprising as additional active components urea, potassium oxide, an inorganic nitrate, a sulfonyl urea or a mixture thereof.

9. A composition according to any one of the claims 6 to 8 comprising 1 to 99 weight percent of ferric chelates of N, N'-ethylene-bis(hydroxyphenyl)glycines, wherein the ratio of o,p-EDDHA to o,o-EDDHA is higher than 0.8:1; 1 to 20 weight percent of urea and 0 to 50 weight percent of potassium oxide.

10. The use of a mixture according to any one of the claims 1 to 4 or of a composition according to any one of claims 6 to 9 as a plant nutrient or fertilizer, or for the treatment of chlorosis of plants.

11. The method of treating plant chlorosis in cultivated plants comprising administering to the plant or the area where it is planted an effective amount of a mixture according to any one of the claims 1 to 4 or of a composition according to any one of claims 6 to 9.

## Patentansprüche

1. Gemisch umfassend isomere N,N'-Ethylen-bis(hydroxyphenyl)glycine, wobei das molare Verhältnis von N,N'-Ethylen-(2-hydroxyphenyl)-glycinyl-(4-hydroxyphenyl)glycin (o,p-EDDHA) zu N,N'-Ethylen-bis(2-hydroxyphenyl)glycin (o,o-EDDHA) höher als 0,8:1 ist.

2. Metallkomplexe aus Gemischen umfassend isomere N,N'-Ethylen-bis(hydroxyphenyl)glycine, wobei das molare Verhältnis von N,N'-Ethylen-(2-hydroxyphenyl)-glycinyl-(4-hydroxyphenyl)glycin (o,p-EDDHA) zu N,N'-Ethylen bis (2-hydroxyphenyl)glycin (o,o-EDDHA) höher als 0,8:1 ist.

3. Metallkomplexe gemäß Anspruch 2, wobei diese Metallkomplexe Eisenchelate von EDDHA sind.

4. Gemisch gemäß Anspruch 1, wobei das Verhältnis der isomeren o,p- zu o,o-EDDHA 0,9:1 bis 100:1 beträgt.

5. Verfahren zur Herstellung einer Mischung gemäß Anspruch 1, umfassend die Umwandlung von o,o-EDDHA in o, p-EDDHA durch Änderung des pH-Werts bei Temperaturen von +50°C bis +120°C.

6. Agrichemische Zusammensetzung umfassend die Mischung aus o,p-EDDHA und o,o-EDDHA oder einen Metallkomplex davon gemäß irgendeinem der Ansprüche 1 bis 4 als wirksamen Bestandteil.

7. Zusammensetzung gemäß Anspruch 6 weiterhin umfassend zusätzliche Pflanzennährstoffe oder Pflanzendünger, Herbizide, Insektizide, Fungizide, Bakterizide, Nematizide, Molluskizide oder Gemische daraus.

8. Zusammensetzung gemäß Anspruch 7 umfassend als zusätzliche wirksame Bestandteile Harnstoff, Kaliumoxid, ein anorganisches Nitrat, Sulfonylharnstoff oder eine Mischung daraus.

9. Zusammensetzung gemäß irgendeinem der Ansprüche 6 bis 8 umfassend 1 bis 99 Gew.% an Eisenchelaten von N,N'-Ethylen-bis(hydroxyphenyl)glycin, wobei das Verhältnis von o,p-EDDHA zu o,o-EDDHA höher als 0,8:1 ist, 1 bis 20 Gew.% Harnstoff und 0 bis 50 Gew.% Kaliumoxid.

10. Verwendung eines Gemischs gemäß irgendeinem der Ansprüche 1 bis 4 oder einer Zusammensetzung gemäß irgendeinem der Ansprüche 6 bis 9 als Pflanzennährstoff oder -dünger oder zur Behandlung von Chlorose in Pflanzen.

11. Verfahren zur Behandlung von Pflanzenchlorose in Kulturpflanzen, umfassend die Verabreichung einer wirksamen Menge eines Gemischs gemäß irgendeinem der Ansprüche 1 bis 4 oder einer Zusammensetzung gemäß irgendeinem der Ansprüche 6 bis 9 an die Pflanze oder den Bereich, wo diese gepflanzt ist.

## Revendications

1. Mélange comprenant des N,N'-éthylène-bis-(hydroxyphényl)glycines isomères, dans lequel le rapport molaire de la N,N'-éthylène- (2-hydroxy-phényl)-glycinyl-(4-hydroxyphényl)glycine (o,p-EDDHA) à la N,N'-éthylène-bis(2-hydroxyphényl)-glycine (o,o-EDDHA) est supérieur à 0,8/1.

2. Complexes métalliques de mélanges comprenant des N,N'-éthylène-bis(hydroxyphényl)glycines isomères, dans lesquels le rapport molaire de la N,N'-éthylène-(2-hydroxyphényl)-glycinyl-(4-hydroxy-phényl)glycine (o,p-EDDHA) à la N,N'-éthylène-bis(2-hydroxyphényl)-glycine (o,o-EDDHA) est supérieur à 0,8/1.

3. Complexes métalliques selon la revendication 2, dans lesquels les complexes métalliques sont des chélates ferriques d'EDDHA.

4. Mélange selon la revendication 1, dans lequel le rapport de o,p-EDDHA isomère à o,o-EDDHA isomère est de 0,9/1 à 100/1.

5. Procédé de préparation d'un mélange selon la revendication 1, comprenant la conversion de o,o-EDDHA en o,p-EDDHA en changeant la valeur du pH à des températures allant de +50°C à +120°C.

6. Composition agrochimique comprenant comme composant actif le mélange de o,p-EDDHA et o,o-EDDHA, ou un complexe métallique de ceux-ci, selon l'une quelconque des revendications 1 à 4.

7. Composition selon la revendication 6, comprenant en outre d'autres nutriments végétaux ou fertilisants végétaux, des herbicides, des insecticides, des fongicides, des bactéricides, des nématicides, des molluscicides ou des mélanges de ceux-ci.

8. Composition selon la revendication 7, comprenant comme autres composants actifs, l'urée, l'oxyde de potassium, un nitrate inorganique, une sulfonylurée ou un mélange de ceux-ci.

9. Composition selon l'une quelconque des revendications 6 à 8 comprenant de 1 à 99 % en poids de chélates ferriques de N,N'-éthylène-bis-(hydroxyphényl)-glycines, dans laquelle le rapport molaire de o,p-EDDHA à o,o-EDDHA est supérieur à 0, 8/1, de 1 à 20 % en poids d'urée et de 0 à 50 % en poids d'oxyde de potassium.

10. Utilisation d'un mélange selon l'une quelconque des revendications 1 à 4 ou d'une composition selon l'une quelconque des revendications 6 à 9 en tant que nutriment ou fertilisant végétal, ou pour le traitement de la chlorose des plantes.

**11.** Procédé de traitement de la chlorose des plantes dans des plantes cultivées comprenant l'administration à la plante ou à la zone dans laquelle elle est plantée d'une quantité efficace d'un mélange selon l'une quelconque des revendications 1 à 4 ou d'une composition selon l'une quelconque des revendications 6 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2921847 A
- CH 633257 A
- WO 9530651 A
- EP 837632 A
- DE 1032748
- US 4130582 A


### Non-patent literature cited in the description


- *J. Agric. Food Chem.,* 2003, vol. 51, 5391-5399
- *Journal of Chromatography A,* 1996, vol. 727, 253-264
- *Journal of Chromatography A,* 1997, vol. 789, 453-460
- *J. Agric. Food Chem.,* 2002, vol. 50, 6395-6399
- *Journal of Agriculture & Food Chemistry,* 2001, vol. 49 (8), 3527-32